# EUROPÄISCHE PATENTSCHRIFT

(11) **EP 4 291 809 B1**
(45) Veröffentlichungstag und Bekanntmachung des Hinweises auf die Patenterteilung: **24.09.2025**
(21) Anmeldenummer: 21838998.9
(22) Anmeldetag: 07.12.2021
(51) Int. Cl.: F16J 15/3224, F16J 15/3232, F16J 15/322, F16J 15/16, F16J 15/3216

(54) **LIPPENDICHTUNG MIT BEWEGLICHER UND STARRER LIPPE**
LIP SEAL HAVING A MOVABLE LIP AND A RIGID LIP
JOINT À LÈVRES AYANT UNE LÈVRE MOBILE ET UNE LÈVRE RIGIDE

(30) Priorität: 09.02.2021 DE 102021102934
(43) Veröffentlichungstag der Anmeldung: 20.12.2023
(73) Patentinhaber: EagleBurgmann Germany GmbH & Co. KG, 82515 Wolfratshausen (DE)
(72) Erfinder: DECHOW, Frank, 67551 Worms (DE); EIBL, Christian, 83646 Bad Tölz (DE); SCHWAIGER, Tobias, 82538 Geretsried (DE); KOCH, Eduard, 82538 Geretsried (DE)
(74) Vertreter: Hoefer & Partner Patentanwälte mbB
(86) Internationale Anmeldenummer: PCT/EP2021/084582
(87) Internationale Veröffentlichungsnummer: WO 2022/171329

(56) Entgegenhaltungen:
- US-A1- 2004 130 101
- US-A1- 2012 169 014

## Beschreibung

Die vorliegende Erfindung betrifft eine Lippendichtung mit zwei Lippen, nämlich einer ersten starren Lippe und einer zweiten beweglichen, flexiblen Lippe, und insbesondere eine Rührwerks-Lippendichtung oder eine Lippendichtung für Förderschnecken oder dgl.

Lippendichtungen sind aus dem Stand der Technik in unterschiedlichen Ausgestaltungen bekannt. Ein Einsatzgebiet von Lippendichtungen ist beispielsweise zur Abdichtung von Rührwerkswellen, wobei die Rührwerkswelle üblicherweise vertikal angeordnet ist. Häufig werden Lippendichtungen dabei in Verbindung mit mehreren, in Reihe geschalteten Runddichtungen an einer Welle angeordnet. Lippendichtungen sind üblicherweise aus einem flexiblen Material hergestellt und weisen einen spitz zulaufenden Lippenendbereich auf, welcher an einer abzudichtenden Welle oder dgl. aufliegt. Beispielsweise ist aus der DE 20 2009 013 547 U1 eine Wellendurchführung mit einer vor einer eigentlichen Dichtungsanordnung vorgeschalteten Drossel- und Abstreiferanordnung bekannt. Eine Lippe der Abstreiferanordnung ist dabei berührungslos an einem rotierenden Bauteil angeordnet und dient zur Abweisung von Partikeln und zum Schutz der nachfolgend angeordneten Dichtungsanordnung. Diese Anordnung benötigt jedoch eine relativ große Baulänge in axialer Richtung der abzudichtenden Welle. Ferner ist aus der US 2012 / 0 169 014 A1 eine Lippendichtung mit einer elastomeren Dichtlippe und einer Dichtlippe aus PTFE bekannt, welche keine Radialbewegungen ausgleichen kann, gemäß der Präambel von Anspruch 1.

Es ist Aufgabe der vorliegenden Erfindung, eine Lippendichtung bereitzustellen, welche bei einfachem Aufbau und einfacher, kostengünstiger Herstellbarkeit selbst auch eine Abdichtung bereitstellen kann, so dass nachfolgend keine oder nur eine sehr geringe Anzahl von zusätzlichen Dichtungen zur Abdichtung an der Welle notwendig sind.

Diese Aufgabe wird durch eine Lippendichtung mit den Merkmalen des Anspruchs 1 gelöst. Die Unteransprüche zeigen bevorzugte Weiterbildungen der Erfindung.

Die erfindungsgemäße Lippendichtung mit den Merkmalen des Anspruchs 1 weist den Vorteil auf, dass die Lippendichtung selbst alleine eine sehr gute Abdichtungswirkung an einem rotierenden Bauteil, wie beispielsweise einer Welle oder einer Wellenhülse, bereitstellen kann. Dabei weist die Lippendichtung einen sehr einfachen und kostengünstigen Aufbau auf. Insbesondere ist die Lippendichtung geeignet, um Rührwerkswellen von Rührwerken in der chemischen Industrie oder der Nahrungsmittelindustrie oder dgl., abzudichten. Hierbei umfasst die Lippendichtung zur Abdichtung an einem rotierenden Bauteil ein Basisteil, eine bewegliche, flexible zweite Lippe und einen Stützkörper. Das Basisteil umfasst einen Hauptkörper und eine starre, nicht rotierende erste Lippe, welche einstückig mit dem Hauptkörper ausgebildet ist. Die bewegliche Lippe weist einen Haltebereich und einen beweglichen Lippenbereich auf. Der Stützkörper ist fest mit dem Basisteil verbunden. Die bewegliche Lippe ist dabei an seinem Haltebereich zwischen dem Basisteil und dem Stützkörper fest eingespannt. An der beweglichen Lippe ist ferner ein Bewegungsraum für eine Bewegung der beweglichen Lippe gebildet. Dadurch ist es insbesondere möglich, temperaturbedingte Längenänderungen der Bauteile auszugleichen. Ferner ist durch den Bewegungsraum eine definierte Beweglichkeit der beweglichen Lippe am abzudichtenden rotierenden Bauteil gewährleistet, welche kleinere Auslenkungen des rotierenden Bauteils ausgleichen kann.

Weiter umfasst die Lippendichtung ferner ein Gehäuse mit einem Aufnahmeraum, in welchem das Basisteil und der Stützkörper sowie die bewegliche Lippe zumindest teilweise aufgenommen sind. Radial außerhalb des Basisteils ist dabei zwischen dem Basisteil und dem Gehäuse ein Ausgleichsraum für eine radiale Bewegung des Basisteils in den Ausgleichsraum vorhanden. Das Gehäuse ist vorzugsweise zweiteilig ausgebildet, wodurch eine Montage der Lippendichtung deutlich vereinfacht wird.

Um insbesondere radiale Auslenkungen des rotierenden Bauteils ausgleichen zu können, ist der Bewegungsraum vorzugsweise zwischen der beweglichen Lippe und der starren Lippe des Basisteils ausgebildet.

Der Bewegungsraum an der beweglichen Lippe ermöglicht dabei weiter bevorzugt eine Bewegung der beweglichen Lippe sowohl in Radialrichtung als auch in Axialrichtung. Dadurch können radiale und/oder axiale Auslenkungen des rotierenden Bauteils ausgeglichen werden.

Weiter bevorzugt ist die bewegliche Lippe aus einem flexiblen Material, insbesondere einem PTFE (Polytetrafluorethylen) enthaltenden Werkstoff mit hoher Flexibilität hergestellt. Das Basisteil und der Stützkörper sind vorzugsweise aus einem unflexiblen, harten Material, insbesondere aus einem Metallmaterial, hergestellt.

Das Basisteil umfasst weiter bevorzugt einen Aufnahmebereich für die bewegliche Lippe und den Stützkörper, welcher am Hauptkörper des Basisteils angeordnet ist. Dadurch kann ein sehr kompakter und platzsparender Aufbau erreicht werden.

Weiter bevorzugt weist der Stützkörper einen bogenförmigen Bereich auf, an welchem die bewegliche Lippe anliegt. Die bewegliche Lippe kann sich somit entsprechend der Ausgestaltung des bogenförmigen Bereichs des Stützkörpers an diesen anlegen und dadurch eine Abdichtfunktion verbessert werden.

Weiter bevorzugt umfasst die Lippendichtung ferner eine Wellenhülse, wobei die feststehende Lippe die Wellenhülse an einem Kontaktbereich in einer nicht vollständig abdichtenden Weise berührt. Somit befinden sich die starre Lippe und die Wellenhülse in Kontakt miteinander, allerdings derart, dass keine vollständige Dichtwirkung erreicht wird, sondern insbesondere Feststoffe im abzudichtenden Medium oder dgl. von der Lippendichtung ferngehalten werden können und nur eine minimale Leckage von Gas oder Flüssigkeit über die starre Lippe des Basisteils zur beweglichen Lippe gelangt.

Die Wellenhülse weist besonders bevorzugt am Kontaktbereich eine Beschichtung auf. Dadurch wird ein Reibwiderstand der starren Lippe an der Wellenhülse reduziert. Besonders bevorzugt ist hierbei in der Wellenhülse eine Vertiefung ausgebildet, welche dann mit einem Material der Beschichtung aufgefüllt ist. Alternativ oder zusätzlich weist die starre Lippe des Basisteils eine Beschichtung auf. Dadurch können Reibwerte zwischen der starren Lippe und dem rotierenden Bauteil, insbesondere der Wellenhülse, reduziert werden.

Um eine Dichtwirkung der Lippendichtung zu verbessern, weist der Stützkörper vorzugsweise an einer radialen Innenseite eine Labyrinthdichtung auf. Somit umfasst die erfindungsgemäße Lippendichtung in Reihe wenigstens drei Dichtbereichen, nämlich die erste starre Lippe, die zweite bewegliche Lippe sowie die Labyrinthdichtung.

Für eine noch bessere Abdichtung umfasst der Stützkörper an seiner radialen Innenseite eine Gleithülse. Die Gleithülse befindet sich in Kontakt mit dem rotierenden Bauteil und ist vorzugsweise aus PTFE hergestellt. Besonders bevorzugt ist im Bereich der Gleithülse am rotierenden Bauteil eine Beschichtung vorgesehen. Die Gleithülse stellt einen vierten Dichtbereich bereit.

Vorzugsweise sind der Stützkörper und das Basisteil fest miteinander verbunden. Die Verbindung zwischen Stützkörper und Basisteil ist vorzugsweise eine Klemmverbindung. Alternativ ist zwischen dem Stützkörper und dem Basisteil eine Schraubverbindung oder eine Verbindung mittels Pressstiften vorgesehen.

Weiter bevorzugt ist zwischen dem Gehäuse und dem Basisteil ein erstes, scheibenförmiges Dichtelement angeordnet. Ferner bevorzugt ist zwischen dem Gehäuse und dem Stützkörper ein zweites scheibenförmiges Dichtelement angeordnet. Das erste und zweite Dichtelement sind vorzugsweise PTFE-Scheiben.

Besonders bevorzugt weist die bewegliche Lippe im beweglichen Lippenbereich eine Vielzahl von Nuten an einer radial nach innen gerichteten Seite auf. Vorzugsweise verlaufen die Nuten in Axialrichtung der Lippendichtung parallel zueinander.

Gemäß einer weiteren bevorzugten Ausgestaltung der Erfindung weist die Lippendichtung eine Spülmöglichkeit auf. Vorzugsweise ist dabei im Basisteil ein erster Kanal ausgebildet, welcher durch den Hauptkörper und die starre Lippe verläuft. Der erste Kanal mündet dabei in den Bewegungsraum zwischen der beweglichen Lippe und der starren Lippe. Weiter bevorzugt ist im Stützkörper ein zweiter Kanal ausgebildet, welcher von einer Außenseite des Stützkörpers zu einer radialen Innenseite des Stützkörpers verläuft.

Zum Zuführen eines Sperrfluids weist das Basisteil vorzugsweise an einer Rückseite einen Zufuhrkanal auf, welcher mit dem ersten und zweiten Kanal verbunden ist.

Um insbesondere temperaturbedingte Längenänderungen der beweglichen Lippe in radialer Richtung aufnehmen zu können, ist vorzugsweise an einem Ende des Haltebereichs der beweglichen Lippe ein radialer Ausgleichsraum vorgesehen. Somit kann sichergestellt werden, dass auch bei Temperaturänderungen eine radiale Ausdehnung der beweglichen Lippe möglich ist, so dass sich keine verschlechterte Abdichtung durch die bewegliche Lippe bei sich ändernden Umgebungstemperaturen oder sich ändernden Temperaturen des abzudichtenden Mediums ergeben.

Ferner betrifft die Erfindung eine Dichtungsanordnung, umfassend eine erfindungsgemäße Lippendichtung sowie eine in Reihe zur Lippendichtung geschaltete zusätzliche Dichtung, insbesondere eine Gleitringdichtung. Da die Lippendichtung selbst Dichtwirkung aufweist, ist es möglich, dass mit nur einer einzigen, in Reihe geschalteten zusätzlichen Dichtung eine ausreichende Abdichtung an einem rotierenden Bauteil, insbesondere einer Rührwerkswelle, möglich ist.

Nachfolgend werden bevorzugte Ausführungsbeispiele der Erfindung unter Bezugnahme auf die begleitende Zeichnung im Detail beschreiben. In der Zeichnung ist:
- Fig. 1: eine schematische Teilschnittansicht einer Lippendichtung gemäß einem ersten Ausführungsbeispiel der Erfindung, und
- Fig. 2: eine schematische Teilschnittansicht einer Lippendichtung gemäß einem zweiten Ausführungsbeispiel der Erfindung.

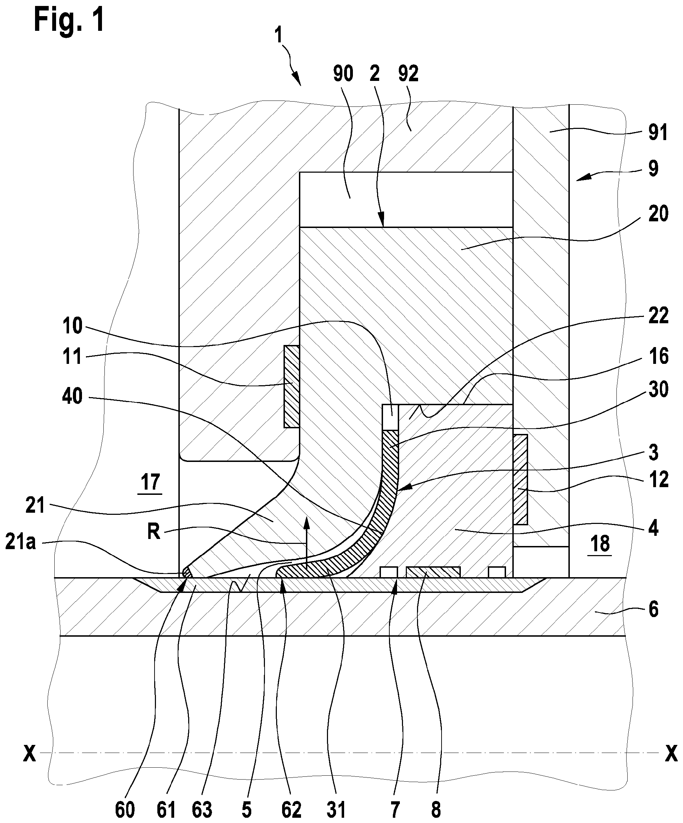

Nachfolgend wird unter Bezugnahme auf Fig. 1 eine Lippendichtung 1 gemäß einem ersten bevorzugten Ausführungsbeispiel der Erfindung im Detail beschrieben.

Die Lippendichtung 1 dichtet dabei einen Produktbereich 17 von einem nachgeordneten Bereich 18, beispielsweise einem Atmosphärenbereich, ab. Wie aus Fig. 1 ersichtlich ist, umfasst die Lippendichtung 1 ein hartes Basisteil 2 mit einem Hauptkörper 20 und einer daran einstückig angeordneten starren, unflexiblen Lippe 21. Die Lippe 21 weist ein sich verjüngendes Ende auf.

Das sich verjüngende Ende ist mit einem rotierenden Bauteil, in diesem Ausführungsbeispiel einer Wellenhülse 6, in Kontakt. Wie aus Fig. 1 ersichtlich ist, ist auf der Wellenhülse 6 eine Beschichtung 61, welche eine in einem Außenumfang der Welle befindliche Vertiefung 63 ausfüllt, versehen.

Die starre Lippe 21 des Basisteils 2 liegt an der Wellenhülse 6 im Bereich der Beschichtung 61 an einem ersten Kontaktbereich 60 in einer nicht vollständig abdichtenden Weise auf.

Die Lippendichtung 1 umfasst ferner eine zweite bewegliche Lippe 3, welche beispielsweise aus PTFE hergestellt ist. Die bewegliche Lippe 3 umfasst einen Haltebereich 30 und einen beweglichen Lippenbereich 31. Der Haltebereich 30 ist in Radialrichtung R angeordnet und der bewegliche Lippenbereich 31 berührt die Oberfläche des rotierenden Bauteils an einem zweiten Kontaktbereich 62.

Die Lippendichtung 1 umfasst ferner einen harten Stützkörper 4, welcher fest mit dem Basisteil 2 verbunden ist. In diesem Ausführungsbeispiel ist eine Klemmverbindung 16 zwischen dem Stützkörper 4 und dem Basisteil 2 ausgebildet.

Die bewegliche Lippe 3 ist am Haltebereich 30 zwischen dem Basisteil 2 und dem Stützkörper 4 fest eingespannt. Radial außerhalb des Haltebereichs 30 ist ein erster radialer Ausgleichsraum 10 ausgebildet.

Weiterhin ist an der beweglichen Lippe 3 ein Bewegungsraum 5 gebildet. Wie aus Fig. 1 ersichtlich ist, ist der Bewegungsraum 5 zwischen der beweglichen Lippe 3 und der starren Lippe 21 vorgesehen. Die bewegliche Lippe 3 kann sich dabei sowohl in Axialrichtung X-X als auch in Radialrichtung R bewegen. Dadurch können insbesondere temperaturbedingte Längenänderungen der beweglichen Lippe 3 und anderer Bauteile ausgeglichen werden. Die aus PTFE hergestellte bewegliche Lippe 3 ist dabei sehr flexibel. Wie aus Fig. 1 ersichtlich ist, weist die bewegliche Lippe 3 dabei eine konstante Dicke auf. Weiter ist ein sich verjüngendes Ende an der beweglichen Lippe 3 gebildet. Dabei befindet sich die bewegliche Lippe 3 am zweiten Kontaktbereich 62 direkt in Kontakt mit der Beschichtung 61 der Wellenhülse 6 und dichtet ab.

Wie weiter aus Fig. 1 ersichtlich ist, sind die bewegliche Lippe 3 und der Stützkörper 4 in einem Aufnahmebereich 22 des Basisteils 2 angeordnet. Dabei schließt eine Rückseite des Stützkörpers 4 mit dem Hauptkörper 20 des Basisteils 2 bündig ab.

Der Stützkörper 4 weist einen bogenförmigen Bereich 40 auf, an welchem die bewegliche Lippe 3 anliegt. Dadurch weist die bewegliche Lippe 3 im montierten Zustand eine bogenförmige Form, ausgehend vom radial ausgerichteten Haltebereich 30 bis zum freien Ende an der Beschichtung 61 auf.

Es sei angemerkt, dass in diesem Ausführungsbeispiel eine Beschichtung 21a auch an der starren Lippe 21 des Basisteils 2 vorgesehen ist. Alternativ können auch nur eine Beschichtung an der starren Lippe 21 oder an der Wellenhülse 6 vorgesehen sein.

Wie weiter aus Fig. 1 ersichtlich ist, weist der Stützkörper 4 an einer radialen Innenseite eine Labyrinthdichtung 7 auf. Die Labyrinthdichtung 7 wirkt dabei als zusätzliche Drosseleinrichtung, um den Produktbereich 17 gegenüber dem nachgeordneten Bereich 18 abzudichten.

Wie weiter aus Fig. 1 ersichtlich ist, ist in die Labyrinthdichtung 7 ferner eine Gleithülse 8, vorzugsweise aus PTFE, angeordnet. Die Gleithülse 8 gleitet auf der Beschichtung 61 der Wellenhülse 6 und stellt eine zusätzliche Abdichtung bereit.

Somit dichten ausgehend vom Produktbereich 17 zuerst die erste starre Lippe 21, die die Beschichtung 61 kontaktiert, die zweite bewegliche Lippe 3, die Labyrinthdichtung 7 und die Gleithülse 8 in Richtung zum nachgeordneten Bereich 18 ab.

Die Lippendichtung 1 des ersten Ausführungsbeispiels ist eine vormontierte Baugruppe, welche auch ein Gehäuse 9 umfasst. Das Gehäuse 9 weist ein erstes Gehäuseteil 91 und ein zweites Gehäuseteil 92 auf, welche beispielsweise mittels einer Schraubverbindung miteinander verbunden sind. Dabei ist zwischen den ersten und zweiten Gehäuseteilen 91, 92 ein Aufnahmebereich 22 ausgebildet, in welchem das Basisteil 2, die bewegliche Lippe 3 und der Stützkörper 4 angeordnet sind. Dabei ergibt sich radial außerhalb des Basisteils 2 ein zweiter Ausgleichsraum 90, welcher dazu eingerichtet ist, Radialbewegungen des rotierenden Bauteils, welche auf die Lippendichtung und insbesondere auf das Basisteil 2 ausgeübt werden können, so auszugleichen, dass das Basisteil 2, die bewegliche Lippe 3 und der Stützkörper 4 den Radialbewegungen des rotierenden Bauteils folgen können und das Basisteil 2 nicht gegen das Gehäuse oder ein anderes Bauteil anstößt.

Weiter bevorzugt sind eine erste Dichtscheibe 11 und eine zweite Dichtscheibe 12 vorgesehen. Wie aus Fig. 1 ersichtlich ist, ist die erste Dichtscheibe 11 zwischen dem Gehäuse 9 und dem Basisteil 2 angeordnet. Die zweite Dichtscheibe 12 ist zwischen dem Stützkörper 4 und dem Gehäuse 9 angeordnet. Die erste und zweite Dichtscheibe 11, 12 sind vorzugsweise ebenfalls aus PTFE hergestellt und dichten den Radialspalt zwischen dem Gehäuse 9 und dem Basisteil 2 bzw. im Stützkörper 4 ab.

Der Kontakt zwischen der starren Lippe 21 des Basisteils 2 und der Wellenhülse 6 im Bereich der Beschichtung 61 dichtet zwar den Produktbereich 17 nicht vollständig ab, da insbesondere Flüssigkeiten und/oder Gase in geringem Umfang durch den ersten Kontaktbereich 60 in den Bewegungsraum 5 gelangen können, allerdings kann ein Großteil der Flüssigkeiten und/oder Gase und insbesondere auch evtl. im Produkt enthaltene Feststoffe zurückgehalten werden. Durch den Kontakt der beweglichen Lippe 3 mit der Wellenhülse 6 am zweiten Kontaktbereich 62 wird weiterhin verhindert, dass das sich im Bewegungsraum 5 befindliche Medium weiter in Richtung zum nachgeordneten Bereich 18 ausbreiten kann. Sollte dennoch etwas durch den zweiten Kontaktbereich 62 gelangen, dichtet anschließend die Labyrinthdichtung 7 mit der integrierten Gleithülse 8, welche auf der Wellenhülse 6 gleitet und abdichtet, ab. Somit kann sicher verhindert werden, dass Produkt aus dem Produktbereich 17 über die Lippendichtung 1 bis in den nachgeordneten Bereich 18 gelangen kann.

Dadurch ist es möglich, dass im nachgeordneten Bereich 18 keine oder höchstens eine zusätzliche Dichtung, beispielsweise eine Gleitringdichtung, zur Abdichtung und als Sicherheitsdichtung an dem rotierenden Bauteil angeordnet werden muss. Dadurch kann eine axiale Baulänge der Dichtungsanordnung, beispielsweise von Rührwerken, in Vergleich mit dem Stand der Technik signifikant reduziert werden, da lediglich eine einzige Lippendichtung gemäß der Erfindung und gegebenenfalls eine einzige zusätzliche Gleitringdichtung notwendig sind, um eine sichere Abdichtung vom Produktbereich 17 zum nachgeordneten Bereich 18 sicherzustellen.

Die erfindungsgemäße Lippendichtung 1 kann dabei als vormontierbare Einheit vorgesehen werden und so einfach an einem rotierenden Bauteil montiert werden.

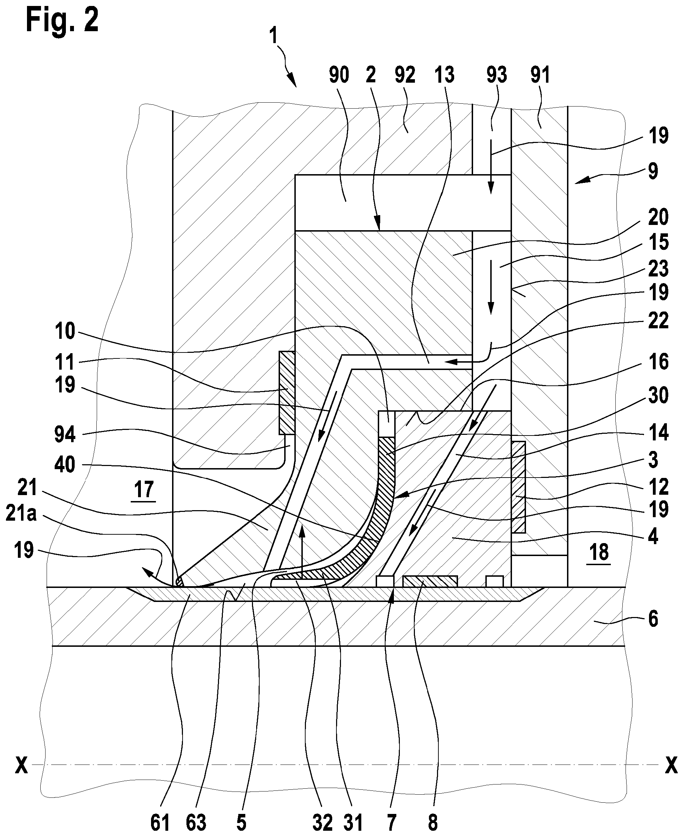

Fig. 2 zeigt eine zur Abdichtung an einem rotierenden Bauteil vorgesehene Lippendichtung 1 gemäß einem zweiten Ausführungsbeispiel der Erfindung. Gleiche bzw. funktional gleiche Teile sind mit den gleichen Bezugszeichen wie im ersten Ausführungsbeispielen bezeichnet.

Wie aus Fig. 2 ersichtlich ist, ist im Unterschied zum ersten Ausführungsbeispiel beim zweiten Ausführungsbeispiel eine Spülmöglichkeit der Lippendichtung 1 gegeben. Hierbei ist im Basisteil 2 ein erster Kanal 13 vorgesehen, welcher durch den Hauptkörper 20 und die starre Lippe 21 bis zum Bewegungsraum 5 führt. Ferner ist im Stützkörper 4 ein zweiter Kanal 14 ausgebildet, welcher durch den Stützkörper 4 bis zur Labyrinthdichtung 7 führt. Hierbei ist an einer Rückseite 23 des Basisteils 2 ein Zufuhrkanal 15 vorgesehen, welcher in Radialrichtung verläuft und ein Spülfluid zum ersten Kanal 13 und zum zweiten Kanal 14 zuführt. Der Weg des Spülfluids ist in Fig. 2 durch die Pfeile 19 dargestellt. Das Spülfluid wird dabei durch eine Öffnung 93 im Gehäuse 9 zugeführt.

Wie weiter aus Fig. 2 ersichtlich ist, ist im Gehäuse 9 ferner ein breiter Spalt 94 vorgesehen, welcher im Bereich der ersten Dichtscheibe 11 angeordnet ist. Dadurch kann Produkt bis zur radialen Innenseite der ersten Dichtscheibe 11 gelangen. Diese Ausgestaltung hat den Vorteil, dass insbesondere eine Reinigung im Bereich des Spaltes 94 zwischen dem Gehäuse und dem Basisteil 2 deutlich vereinfacht werden kann, da durch den verbreiterten Spalt 94 eine sehr gute Zugänglichkeit zu diesem ansonsten sehr schwer zu reinigenden Bereich erreicht werden kann.

Wie weiter aus Fig. 2 ersichtlich ist, sind an der beweglichen Lippe 3 ferner Nuten 32, welche in Axialrichtung X-X verlaufen, an einer Innenseite des beweglichen Lippenbereichs 31 ausgebildet. Die Nuten 32 ermöglichen dabei eine verbesserte Spülung im Bereich der beweglichen Lippe 3.

Die Lippendichtung 1 des zweiten Ausführungsbeispiels kann somit einerseits einfacher gereinigt werden, da spezielle Spülkanäle für eine Reinigung vorgesehen sind und gezielt eine Reinigung an ansonsten schwer zu reinigenden Stellen möglich ist. Ferner ist es auch denkbar, dass im Betrieb der Lippendichtung 1 ein Sperrfluid durch die Kanalanordnung entsprechend den Pfeilen 19 zugeführt wird, wodurch eine Dichtwirkung der Lippendichtung weiter verbessert wird.

### Bezugszeichenliste

- 1: Lippendichtung
- 2: Basisteil
- 3: zweite bewegliche, flexible Lippe
- 4: Stützkörper
- 5: Bewegungsraum
- 6: Wellenhülse
- 7: Labyrinthdichtung
- 8: Gleithülse
- 9: Gehäuse
- 10: erster Ausgleichsraum
- 11: erste Dichtscheibe
- 12: zweite Dichtscheibe
- 13: erster Kanal
- 14: zweiter Kanal
- 15: Zuführkanal
- 16: Klemmverbindung
- 17: Produktbereich
- 18: nachgeordneter Bereich
- 19: Spülfluid
- 20: Hauptkörper
- 21: erste starre, unflexible Lippe
- 21a: Beschichtung an der starren, unflexiblen Lippe
- 22: Aufnahmebereich
- 23: Rückseite
- 30: Haltebereich
- 31: beweglicher Lippenbereich
- 32: Nuten
- 40: bogenförmiger Bereich
- 60: erster Kontaktbereich
- 61: Beschichtung
- 62: zweiter Kontaktbereich
- 63: Vertiefung in der Wellenhülse
- 90: zweiter Ausgleichsraum
- 91: erstes Gehäuseteil
- 92: zweites Gehäuseteil
- 93: Öffnung
- 94: Spalt
- R: Radialrichtung
- X-X: Axialrichtung

## Patentansprüche

1. Lippendichtung (1) zur Abdichtung an einem rotierenden Bauteil, umfassend:
- ein Basisteil (2) mit einem Hauptkörper (20) und einer starren Lippe (21), welche am Hauptkörper (20) einstückig angeordnet ist,
- eine bewegliche Lippe (3) mit einem Haltebereich (30) und einem beweglichen Lippenbereich (31), und
- einen Stützkörper (4), welcher fest mit dem Basisteil (2) verbunden ist,
- wobei die bewegliche Lippe (3) am Haltebereich (30) zwischen dem Basisteil (2) und dem Stützkörper (4) fest eingespannt ist,
- wobei an der beweglichen Lippe (3) ein Bewegungsraum (5) für eine Bewegung der beweglichen Lippe (3) gebildet ist, **dadurch gekennzeichnet, dass** die Lippendichtung (1) ferner ein Gehäuse (9) umfasst, in welchem das Basisteil (2) und der Stützkörper (4) zumindest teilweise aufgenommen sind, wobei radial außerhalb des Basisteils (2) zwischen dem Basisteil (2) und dem Gehäuse (9) ein Ausgleichsraum (90) für eine radiale Bewegung des Basisteils (2) ausgebildet ist.

2. Lippendichtung nach Anspruch 1, wobei der Bewegungsraum (5) zwischen der beweglichen Lippe (3) und der starren Lippe (21) ausgebildet ist.

3. Lippendichtung nach Anspruch 2, wobei der Bewegungsraum (5) eine Bewegung der beweglichen Lippe (3) in Radialrichtung und Axialrichtung (X-X) ermöglicht.

4. Lippendichtung nach einem der vorhergehenden Ansprüche,
- wobei die bewegliche Lippe (3) aus einem flexiblen Material hergestellt ist und/oder
- wobei das Basisteil (2) und der Stützkörper (4) aus einem harten Material hergestellt sind.

5. Lippendichtung nach einem der vorhergehenden Ansprüche, wobei die starre Lippe (21) am Hauptkörper (20) des Basisteils (2) derart angeordnet ist, dass benachbart zur starren Lippe (21) ein Aufnahmebereich (22) zur Aufnahme der beweglichen Lippe (3) und des Stützkörpers (4) ausgebildet ist.

6. Lippendichtung nach einem der vorhergehenden Ansprüche, wobei der Stützkörper (4) einen bogenförmigen Bereich (40) aufweist, an welchem die bewegliche Lippe (3) zumindest teilweise anliegt.

7. Lippendichtung nach einem der vorhergehenden Ansprüche, ferner umfassend eine Wellenhülse (6), wobei die starre Lippe (21) des Basisteils die Wellenhülse (6) an einem Kontaktbereich (60) in nicht vollständig abdichtender Weise berührt.

8. Lippendichtung nach Anspruch 7, wobei die Wellenhülse (6) am Kontaktbereich (60) eine Beschichtung (61) aufweist und/oder wobei die starre Lippe (21) am Kontaktbereich eine Beschichtung (21a) aufweist.

9. Lippendichtung nach einem der vorhergehenden Ansprüche, wobei der Stützkörper (4) an einer radialen Innenseite eine Labyrinthdichtung (7) aufweist und/oder wobei der Stützkörper (4) an einer radialen Innenseite eine Gleithülse (8) aufweist.

10. Lippendichtung nach einem der vorhergehenden Ansprüche, wobei der Stützkörper (4) und das Basisteil (2) mittels einer Klemmverbindung (16) fest miteinander verbunden sind.

11. Lippendichtung nach einem der vorliegenden Ansprüche, wobei zwischen dem Gehäuse (9) und dem Basisteil (2) ein erstes scheibenförmiges Dichtelement (11) angeordnet ist und zwischen dem Gehäuse (9) und dem Stützkörper (4) ein zweites scheibenförmiges Dichtelement (12) angeordnet ist.

12. Lippendichtung nach Anspruch 11, wobei das erste scheibenförmige Dichtelement (11) an einem radial nach innen gerichteten Bereich zumindest teilweise zu dem abzudichtenden Medium (17) freiliegt.

13. Lippendichtung nach einem der vorhergehenden Ansprüche, wobei die bewegliche Lippe (3) im beweglichen Lippenbereich (31) eine Vielzahl von Nuten (32) an einer radial nach innen gerichteten Seite aufweist.

14. Lippendichtung nach einem der vorhergehenden Ansprüche,
- wobei im Basisteil (2) ein erster Kanal (13) ausgebildet ist, welcher durch den Hauptkörper (20) und die starre Lippe (21) verläuft und im Bewegungsraum (5) zwischen der beweglichen Lippe (3) und der starren Lippe (21) mündet und/oder
- wobei im Stützkörper (4) ein zweiter Kanal (14) ausgebildet ist, welcher von einer Außenseite des Stützkörpers (4) zu einer radialen Innenseite des Stützkörpers (4) verläuft.

## Claims

1. Lip seal (1) for sealing on a rotating component, comprising:
- a base part (2) having a main body (20) and a rigid lip (21), which is integrally arranged on the main body (20),
- a movable lip (3) having a retaining area (30) and a movable lip area (31), and
- a support body (4) which is firmly connected to the base part (2),
- wherein the retaining area (30) of the movable lip (3) is rigidly clamped between the base part (2) and the support body (4)
- wherein a movement space (5) for movement of the movable lip (3) is formed on the movable lip (3), **characterized in that** the lip seal (1) further comprises a housing (9), in which the base part (2) and the support body (4) are at least partially received, wherein a compensation space (90) for a radial movement of the base part (2) is formed radially outside the base part (2) between the base part (2) and the housing (9).

2. Lip seal according to claim 1, wherein the movement space (5) is formed between the movable lip (3) and the rigid lip (21).

3. Lip seal according to claim 2, wherein the movement space (5) facilitates a movement of the movable lip (3) in the radial direction and the axial direction (X-X).

4. Lip seal according to any one of the preceding claims,
- wherein the movable lip (3) is produced from a flexible material, and/or
- wherein the base part (2) and the support body (4) are produced from a hard material.

5. Lip seal according to any one of the preceding claims, wherein the rigid lip (21) is arranged on the main body (20) of the base part (2) such that a receiving area (22) for receiving the movable lip (3) and the support body (4) is formed adjacent to the rigid lip (21).

6. Lip seal according to any one of the preceding claims, wherein the support body (4) comprises an arcuate area (40) on which the movable lip (3) at least partially rests.

7. Lip seal according to any one of the preceding claims, further comprising a shaft sleeve (6), wherein the rigid lip (21) of the base part contacts the shaft sleeve (6) at a contact area (60) in a non-fully sealing manner.

8. Lip seal according to claim 7, wherein the shaft sleeve (6) comprises a coating (61) on the contact area (60) and/or wherein the rigid lip (21) comprises a coating (21a) on the contact area.

9. Lip seal according to any one of the preceding claims, wherein the support body (4) comprises a labyrinth seal (7) on a radial inner side and/or wherein the support body (4) comprises a sliding sleeve (8) on a radial inner side.

10. Lip seal according to any one of the preceding claims, wherein the support body (4) and the base part (2) are firmly connected to each other by means of a clamp connection (16).

11. Lip seal according to any one of the preceding claims, wherein a first disc-shaped sealing element (11) is arranged between the housing (9) and the base part (2) and a second disc-shaped sealing element (12) is arranged between the housing (9) and the support body (4).

12. Lip seal according to claim 11, wherein the first disc-shaped sealing element (11) is at least partially exposed to the medium (17) to be sealed at a radially inwardly directed area.

13. Lip seal according to any one of the preceding claims, wherein the movable lip (3) comprises a plurality of grooves (32) in the movable lip area (31) on a radially inwardly directed side.

14. Lip seal according to any one of the preceding claims,
- wherein a first channel (13) is formed in the base part (2), which extends through the main body (20) and the rigid lip (21) and opens out in the movement space (5) between the movable lip (3) and the rigid lip (21) and/or
- wherein a second channel (14) is formed in the support body (4), which extends from an outer side of the support body (4) to a radially inner side of the support body (4).

## Revendications

1. Joint à lèvre (1) pour l'étanchéité sur un composant rotatif, comprenant :
- une partie de base (2) avec un corps principal (20) et une lèvre rigide (21), laquelle est disposée d'une seule pièce sur le corps principal (20),
- une lèvre mobile (3) avec une zone de maintien (30) et une zone de lèvre mobile (31), et
- un corps de support (4), lequel est solidaire de la partie de base (2),
- dans lequel la lèvre mobile (3) est fermement serrée sur la zone de maintien (30) entre la partie de base (2) et le corps de support (4),
- dans lequel un espace de mouvement (5) pour un mouvement de la lèvre mobile (3) est formé sur la lèvre mobile (3), **caractérisé en ce que** le joint à lèvre (1) comprend en outre un boîtier (9) dans lequel la partie de base (2) et le corps de support (4) sont au moins partiellement reçus, dans lequel un espace de compensation (90) pour un mouvement radial de la partie de base (2) est réalisé radialement en dehors de la partie de base (2) entre la partie de base (2) et le boîtier (9).

2. Joint à lèvre selon la revendication 1, dans lequel l'espace de mouvement (5) est réalisé entre la lèvre mobile (3) et la lèvre rigide (21).

3. Joint à lèvre selon la revendication 2, dans lequel l'espace de mouvement (5) permet un mouvement de la lèvre mobile (3) dans la direction radiale et la direction axiale (X-X).

4. Joint à lèvre selon l'une quelconque des revendications précédentes,
- dans lequel la lèvre mobile (3) est fabriquée dans un matériau flexible et/ou
- dans lequel la partie de base (2) et le corps de support (4) sont fabriqués dans un matériau dur.

5. Joint à lèvre selon l'une quelconque des revendications précédentes, dans lequel la lèvre rigide (21) est disposée sur le corps principal (20) de la partie de base (2), de sorte qu'une zone de réception (22) pour recevoir la lèvre mobile (3) et le corps de support (4) est réalisée adjacente à la lèvre rigide (21).

6. Joint à lèvre selon l'une quelconque des revendications précédentes, dans lequel le corps de support (4) présente une zone en forme d'arc (40) sur laquelle repose au moins partiellement la lèvre mobile (3).

7. Joint à lèvre selon l'une quelconque des revendications précédentes, comprenant en outre un manchon d'arbre (6), dans lequel la lèvre rigide (21) de la partie de base entre en contact avec le manchon d'arbre (6) au niveau d'une zone de contact (60) de manière non totalement étanche.

8. Joint à lèvre selon la revendication 7, dans lequel le manchon d'arbre (6) présente un revêtement (61) sur la zone de contact (60) et/ou dans lequel la lèvre rigide (21) présente un revêtement (21a) sur la zone de contact.

9. Joint à lèvre selon l'une quelconque des revendications précédentes, dans lequel le corps de support (4) présente un joint à labyrinthe (7) sur une face intérieure radiale et/ou dans lequel le corps de support (4) présente un manchon coulissant (8) sur une face intérieure radiale.

10. Joint à lèvre selon l'une quelconque des revendications précédentes, dans lequel le corps de support (4) et la partie de base (2) sont reliés solidement l'un à l'autre au moyen d'une liaison de serrage (16).

11. Joint à lèvre selon l'une quelconque des revendications précédentes, dans lequel un premier élément d'étanchéité en forme de disque (11) est disposé entre le boîtier (9) et la partie de base (2) et un deuxième élément d'étanchéité en forme de disque (12) est disposé entre le boîtier (9) et le corps de support (4).

12. Joint à lèvre selon la revendication 11, dans lequel le premier élément d'étanchéité (11)en forme de disque est exposé au moins partiellement au milieu (17) à étanchéifier au niveau d'une zone orientée radialement vers l'intérieur.

13. Joint à lèvre selon l'une quelconque des revendications précédentes, dans lequel la lèvre mobile (3) présente dans la zone de lèvre mobile (31) une pluralité de rainures (32) sur un côté orienté radialement vers l'intérieur.

14. Joint à lèvre selon l'une quelconque des revendications précédentes,
- dans lequel un premier canal (13) est réalisé dans la partie de base (2), lequel passe à travers le corps principal (20) et la lèvre rigide (21) et débouche dans l'espace de mouvement (5) entre la lèvre mobile (3) et la lèvre rigide (21) et/ou
- dans lequel un deuxième canal (14), lequel s'étend d'un côté extérieur du corps de support (4) à un côté intérieur radial du corps de support (4), est réalisé dans le corps de support (4).
